# EUROPÄISCHE PATENTSCHRIFT

(11) **EP 1 649 943 B1**
(45) Veröffentlichungstag und Bekanntmachung des Hinweises auf die Patenterteilung: **11.07.2007**
(21) Anmeldenummer: 04025187.8
(22) Anmeldetag: 22.10.2004
(51) Int. Cl.: B09B 1/00, A62C 3/02

(54) **Verfahren zur Behandlung brennender Deponienschüttungen**
Process for treating burning landfills
Procédé de traitement contre l'incendie de décharges

(43) Veröffentlichungstag der Anmeldung: 26.04.2006
(73) Patentinhaber: Kügler, Jost-Ulrich, Dipl.-Ing., D-45219 Essen (DE)
(72) Erfinder: Kügler, Jost Ulrich Dipl.-Ing., 45239 Essen (DE); Belouschek, Peter Prof. Dr., 45481 Mülheim an der Ruhr (DE); Kügler, Katja Dipl.-Ing., 45239 Essen (DE)
(74) Vertreter: Hess, Peter K. G.

(56) Entgegenhaltungen:
- DE-A1- 3 642 786
- DE-A1- 3 727 978

## Beschreibung

### 1. Technisches Gebiet

Die vorliegende Erfindung betrifft ein Verfahren zur Oberflächenabdichtung von Deponieschüttungen, insbesondere von brennenden oder schwelenden Deponieschüttungen. Ein Verfahren zur Oberflächenabdichtung von Deponieschüttungen ist aus DE-A-3 727 978 bekannt.

### 2. Der Stand der Technik

In den südlichen Regionen Europas und Asien wurden und werden in den Ballungs- und Industriegebieten Siedlungsabfälle sowie organische und anorganische industrielle Abfälle in tiefen Gruben oder auf hohen Halden verkippt und dabei mit landesüblich vorkommendem sehr grobem Bauschutt vermischt. Die Schüttung einer solchen Deponie ist dabei in der Regel nur wenig verdichtet. Eine Separierung zwischen organischen und anorganischen Materialien wird nicht vorgenommen.

Durch eine derartige Ablagerung entsteht eine große Porigkeit, so dass Außenluft und Wasser kurzfristig tief in die Deponieschüttung eindringen kann und die Deponieschüttung bis in tiefere Bereiche durchlüftet. Dieses gilt insbesondere für Haldendeponien. In derartigen Deponieschüttungen existieren häufig Schwelbrände, deren Brandherde in unterschiedlicher Tiefe mit großflächiger Ausbreitung liegen. Durch die grobe Offenporigkeit der Deponieschüttung entstehen regelrechte Kamine und Schlote, die den Tiefenbrand weiter anfachen, wobei Feuchtigkeitswirkungen die Schwelbrände zusätzlich begünstigen. Im Ergebnis entweichen aus der Deponie in großen Mengen Deponie- und Brandgase, in denen sogar Dioxine/Furane enthalten sind. Aufgrund der erheblichen Emissionen, die von derartigen schwelenden Deponien ausgehen, sind sie im hohen Maße umweltschädlich. Darüber hinaus ist eine Rekultivierung wegen der Gasaustritte und der hohen Temperaturen an der Oberfläche nicht möglich. Insbesondere in besiedelten Gebieten ist es jedoch dringend notwendig, die äußerst umweltschädlichen Ausgasungen mit Dioxin-/Furangehalten wirksam und schnell zu unterbinden und gleichzeitig eine sachgerechte Rekultivierung durchzuführen.

Um die erläuterten Deponiebrände und ihre Emissionen zu verhindern, sind verschiedene Ansätze bekannt. Im Grundsatz wird dabei versucht, dem Brandherd die Sauerstoffzufuhr zu nehmen und entstehende Schwelgase durch hitzebeständige und dadurch erst raumbeständige Oberflächenabdichtungen zurückzuhalten. Darunter sind dann die Gase gezielt abzusaugen, zu reinigen bzw. zu verbrennen und nicht frei in die Atmosphäre entweichen zu lassen.

Ein Ansatz ist die Injektion mit einem geeigneten Löschmittel, insbesondere wenn der Untergrund durch unterirdische Luftzufuhr infolge weitreichender durchlässiger Schüttungen oder Klüfte die Brände immer wieder anfacht. Im Zuge einer Injektionsmaßnahme kann ein Dichtungsschleier zur Eindämmung des Brandherdes errichtet werden. Zur Herstellung des Dichtungsschleiers werden Zement bzw. zementhaltige Materialien mit Wasser, gegebenenfalls unter Zugaben von Ton-Schluff-Mehlen und Gesteinsmehlen, zur injektionsfähigen Flüssigkeit aufbereitet.

Daneben oder zusätzlich ist es bekannt zur Oberflächenabdichtung für einen Luftabschluss bindige Böden oder Tone lagenweise aufzubringen und zu verdichten, so dass Durchlässigkeitsbeiwerte 1 x 10⁻⁸ bis 5 x 10⁻⁹ m/s entstehen. Die Oberflächenabdichtung ist jedoch nur wirksam, wenn eine Austrocknung nicht zu befürchten ist, was große Rissspalten zur Folge hat. Deshalb sind derartige Abdeckungen nur sinnvoll, wenn der Brandherd einen großen Abstand zur Oberfläche aufweist oder hochliegende Brände zunächst durch Injektionen eingedämmt werden.

Brennende und schwelende Deponien in ariden Zonen, d.h. geographischen Regionen, die wie die oben genannten Gegenden ein Klima mit lang anhaltender intensiver Sonneneinstrahlung und wechselnden Temperaturen bei jahreszeitlich bedingten starken Niederschlägen aufweisen, können mit den genannten Sicherungsmaßnahmen jedoch aus den folgenden Gründen nicht eingegrenzt bzw. gesichert werden:
- Die Injektionsmaßnahmen mit hydraulisch bindenden Mitteln und ortsüblich vorkommenden Zuschlagsstoffen sind aufgrund der Größe der Brände hinsichtlich der Einkapselung und der zu erwartenden benötigten Aufnahmemenge wirtschaftlich nicht vertretbar, da durch die groben Hohlräume das Injektionsmaterial am Brandherd vorbei in große Bereiche zunächst unkontrolliert abläuft.
- Für die Oberflächenabdichtung in den ariden Zonen steht kein bindiger Boden in der erforderlichen Qualität zur Verfügung. Darüber hinaus wird eine bindige Oberflächenabdichtung bei intensiver, langanhaltender Sonneneinstrahlung und Einwirkung hoher Temperaturen von unten zerstört, zumal die Schwelbrände bis nahe zur Oberfläche reichen und hohe Temperaturen unter der Abdichtung entstehen. Bindige Bodenmaterialien, besonders Ton, verlieren ferner bei intensiver Sonneneinstrahlung und besonders bei Schwelbrandtemperaturen ihre abdichtende Wirkung. Dadurch entstehen große Schrumpfrisse und/oder eine Veränderung der Mineralstruktur (Porosität).

Die klassischen Sicherungstechniken, wie sie in Mitteleuropa entwickelt wurden und in den technischen Regelwerken als Stand der Technik zur Herstellung von bindigen, mineralischen Abdichtungen zur Oberflächensicherung vorgegeben werden, scheiden daher aus. Auch können Folien oder Verbundstoffe mit Kunststoffen sowie Ton oder Lehm nicht angewendet werden, da sie ihre Schutzfunktion unter den genannten Beanspruchungen ebenfalls verlieren. Auch die bekannten Trockendichtungen mit Einsatz von speziellen trockenen Tonmehlen kommen aufgrund negativer Veränderung der Tonmineraleigenschaften hinsichtlich der geforderten Dichtwirkung nicht in Betracht.

Verdichtungsmaßnahmen wie eine Tiefenverdichtung mit einer Rüttelflasche nach dem System Keller bringen ebenfalls keinen Erfolg. Dabei wird ein Torpedorüttler mit einem Durchmesser von 50 cm seilgeführt in den Untergrund einvibriert und in die Bohrlöcher körniges Bodenmaterial, wie Sand und Kiessand, nachgestopft. Der Nachteil hierbei ist, dass im groben Bauschutt der Tiefenrüttler häufig stecken bleibt und ständig umgesetzt werden muss und durchlässiges Material nachgefüllt wird, so dass es nicht zu einem ausreichenden Luftabschluss kommt.

Auch die Anwendung einer schweren Fallplattenverdichtung (dynamische Intensivverdichtung) mit Gewichten > 15t aus Fallhöhen von 15m bis 20m ist ungeeignet. Hierdurch wird keine Stauchung des Bodens, sondern ein Verdrängen des Bodens unter der Fallplatte (Grundbruch) mit Entstehung tiefer Krater erzeugt. Diese Maßnahme ist zur Herstellung eines Luftabschlusses in den erläuterten Deponieschüttungen nicht geeignet, da insbesondere grober Bauschutt durch seitliches Ausweichen und Aufbrechen keinerlei Veränderung der Hohlraumbildung zeigt.

Der vorliegenden Erfindung liegt daher das Problem zugrunde, ein Verfahren anzugeben, mit dem die zahlreichen erläuterten Nachteile des Stands der Technik überwunden werden und ein (Schwel-) Brand einer Deponie, insbesondere einer Mülldeponie, gelöscht werden kann, um die Deponie in kürzester Zeit umwelttechnisch zu sichern.

### 3. Zusammenfassung der Erfindung

Die vorliegende Erfindung löst dieses Problem durch ein Verfahren zur Oberflächenabdichtung von Deponieschüttungen, insbesondere brennenden oder schwelenden Deponieschüttungen, mit dem folgenden Verfahrensschritt:

Aufbringen einer hitzebeständigen Gesteinssicherungsschicht, die eine Gesteinsmischung mit einer Körnung eines Durchmesser von 0 - 16 mm umfasst, wobei der Feinstkornanteil mit einem Durchmesser < 0,06 mm mehr als 15 Gewichtsprozent, bevorzugt mehr als 25 Gewichtsprozent und besonders bevorzugt mehr als 30 Gewichtsprozent beträgt und durch Brechen des Gesteins der Gesteinsmischung erzielt worden ist.

Überraschenderweise hat sich herausgestellt, dass mit solch einer Gesteinssicherungsschicht die Oberfläche einer Deponieschüttung gut abgedichtet werden kann, wodurch einerseits Emissionen verhindert werden und andererseits die (Schwel-) Brände im Innern der Deponieschüttung allmählich ersticken, da die weitere Luftzufuhr von der Oberfläche verhindert wird.

Vor dem Aufbringen als Gesteinssicherungsschicht wird die Gesteinsmischung vorteilhaft mit Wasser, insbesondere Meerwasser, so intensiv bewässert, dass sich ein Wassergehalt von ≥ 20 % ergibt. Danach wird die Gesteinsschicht verdichtet.

Vorzugsweise weist die Gesteinsmischung ferner zumindest einen der folgenden Zuschlagstoffe auf: Steinkohlenflugasche, Wirbelschichtasche, Papierasche, Pfannnenschlacke, Klärschlammasche, wobei der / die Zuschlagstoffe vorzugsweise in Mengen von 15 Vol.% - 30 Vol.% zugegeben werden.

Unmittelbar nach dem Aufbringen der Gesteinssicherungsschicht wird vorzugsweise eine Rekultivierungsschicht aufgebracht, die gebrochenen Bauschutt einer Körnung von 0-100 mm, bevorzugt 0-16 mm, vermischt mit Klärschlamm und / oder Gewässerschlamm aufweist.

In einem besonders bevorzugten Ausführungsbeispiel des erfindungsgemäßen Verfahrens erfolgt vor dem Aufbringen der Gesteinssicherungsschicht zunächst eine Fallplattenverdichtung der Deponieschüttung, wobei das Gewicht und /oder die Fallhöhe der Fallplatte in Abhängigkeit der Beschaffenheit des zu verdichtenden Materials der Deponieschüttung so gewählt wird, dass ein seitliches Bodenausweichen unter der Fallplatte im Wesentlichen vermieden wird.

Dieser besonderen Anwendung der an sich bekannten Fallplattenverdichtung liegt der Gedanke zugrunde eine Stauchung der Deponieschüttung und damit eine Tiefenverdichtung auf mehrere Meter Tiefe unter Vermeidung seitlichen Bodenausweichens unter der Fallplatte zu erreichen. Durch eine derartige Behandlung der Deponieschüttung wird die ständige Wiederanfachung der Brandherde durch Schlotbildungen unterbunden. Mit leichten Fallplatten verdichtete Gemische aus Bauschutt und Müll ergeben durch eine Verdichtungswirkung eine Tragschicht, auf der dann die erläuterte Gesteinssicherungsschicht und einer oder mehrere Rekultivierungsschichten unmittelbar aufgetragen werden können, ohne dass spätere Verformungen im Müllkörper durch Verrottung die Gesteinssicherungsschicht schädigen.

Im Allgemeinen beträgt das Gewicht G der Fallplatte bevorzugt ≤10t wobei die Fallplatte eine Fläche F von 1 - 2 m² aufweist, bevorzugt 1,4m² ≤F ≤1,65 m². Die Fallhöhe H der Fallplatte beträgt vorzugsweise ≤10m. In einem besonders bevorzugten Ausführungsbeispiel des erfindungsgemäßen Verfahrens liegt das Gewicht G der Fallplatte vorzugsweise im Bereich 2t < G < 5t, bevorzugt 3t ≤G ≤4t, wenn der mit der Fallplattenverdichtung bearbeitete Bereich der Deponieschüttung zu weniger als 10 % Bauschutt und zu mehr als 90 % Müll aufweist. Die bevorzugte Fallhöhe H liegt in diesem Fall im Bereich 4m < H < 8m, besonders bevorzugt 5m ≤ H ≤ 7m und die Fallplatte weist eine Fläche F von 1 - 2 m², bevorzugt 1,4m² ≤F ≤ 1,65 m² auf.

Weist der mit der Fallplattenverdichtung bearbeitete Bereich der Deponieschüttung zu ungefähr 50 % Bauschutt und zu ungefähr 50 % Müll auf, liegt das Gewicht G der Fallplatte vorzugsweise im Bereich 3t < G < 6t, besonders bevorzugt 4t ≤G ≤ 5t. Die Fallhöhe H liegt in diesem Fall vorzugsweise im Bereich 5m < H < 9m, bevorzugt 6m ≤ H ≤ 8m und die Fallplatte weist eine Fläche F von 1 - 2 m², bevorzugt 1,4m² ≤F ≤1,65 m² auf.

Weist schließlich der mit der Fallplattenverdichtung bearbeitete Bereich der Deponieschüttung zu ungefähr 70 % Bauschutt und zu ungefähr 30 % Müll auf, liegt das Gewicht G der Fallplatte im Bereich 5t < G < 8t, bevorzugt 6t ≤ G ≤ 7t liegt. Die Fallhöhe H liegt dann vorzugsweise im Bereich 9m < H < 13m, bevorzugt 10m ≤H ≤12m liegt und die Fallplatte weist eine Fläche F von 1 - 2 m², bevorzugt 1,4m² ≤ F ≤ 1,65 m² auf.

Vorzugsweise wird die Fallplattenverdichtung mehrfach durchgeführt, insbesondere zumindest dreimal, wobei die wiederholte Fallplattenverdichtung eines Bereichs der Deponieschüttung mit ausreichendem Zeitabstand durchgeführt wird, um einen Abbau von Porenwasserüberdrücken im bearbeiteten Bereich vor der erneuten Fallplattenverdichtung zu ermöglichen. Nach der Fallplattenverdichtung wird die Oberfläche bevorzugt mit einer Walze, insbesondere einer Vibrationswalze mit einem Walzgewicht > 10t, geglättet.

In Bereichen der Deponieschüttung mit einer Neigung ≥1 : 2,5 werden bevorzugt Bermen angelegt werden, wobei der Höhenunterschied der Oberflächen zwei benachbarter Bermen bevorzugt im Wesentlichen der Einwirkungstiefe der Fallplattenverdichtung entspricht. Auf den Bermen kann dann die Fallplattenverdichtung wie auf einem Plateau der Deponieschüttung vorgenommen werden.

Im bevorzugten Ausführungsbeispiel werden schließlich nach dem Aufbringen der Gesteinssicherungsschicht und der Rekultivierungsschicht Gasbrunnen oder Gasdrainagen im Bereich der Brandherde angeordnet um effektiv das unterhalb der Oberfläche anfallende Gas zu beseitigen.

### 4. Kurze Beschreibung der begleitenden Figuren

Im Folgenden werden Aspekte der vorliegenden Erfindung unter Bezugnahme auf die begleitenden Figuren genauer erläutert. Diese Figuren zeigen:
- Fig. 1:: Schematische Darstellung der Fallplattenverdichtung auf einem Deponieplateau gemäß eines ersten Ausführungsbeispiels der vorliegenden Erfindung;
- Fig. 2:: Schematische Darstellung der Fallplattenverdichtung auf einer Deponieböschung mit einer Neigung, die flacher als 1 : 2,5 ist; und
- Fig. 3:: Schematische Darstellung der Fallplattenverdichtung sowie der Gesteinssicherungs- und der Rekultivierungsschicht auf Bermen einer Deponieböschung mit einer Neigung, die steiler als 1: 2,5 ist.
- Fig. 4a - c:: Ergebnisse der Untersuchungen der Wirkung der Fallplattenverdichtung auf unterschiedliche Deponieschüttungen mit einer Rammsonde.

### 5. Detaillierte Beschreibung bevorzugter Ausführungsbeispiele

### Die Fallplattenverdichtung

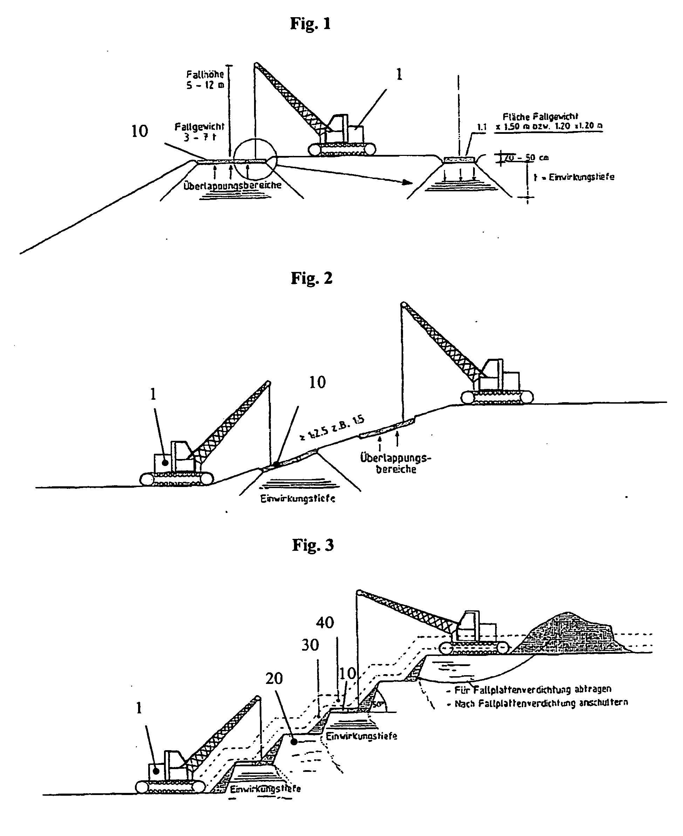

Die Figuren 1 - 3 illustrieren die Fallplattenverdichtung gemäß eines gegenwärtig bevorzugten Ausführungsbeispiels der vorliegenden Erfindung. Wie in Fig. 1 gezeigt, wird die Plateaufläche einer Deponieschüttung mit geeigneten Maschinen 1 unter Verwendung einer Fallplatte 10 abgerammt. Die Fallplatte 10 weist in einem Ausführungsbeispiel eine Fläche von 1,10m x 1,50m auf und in einem anderen Ausführungsbeispiel eine Fläche von 1,20m x 1,20m. Die Abmessungen der Fallplatte 10 können variiert werden; es ist dann jedoch darauf zu achten, dass das Gesamtgewicht der Fallplatte 10 und / oder die Fallhöhe entsprechend angepasst wird um die nachfolgend erläuterte Verdichtungswirkung in der Deponieschüttung herbeizuführen. Die weiter unten angegebenen Werte für das - je nach Beschaffenheit der Deponieschüttung - bevorzugte Gewicht und die bevorzugte Fallhöhe beziehen sich auf Fallplatten der oben angegebenen Abmessungen.

Wie in Fig. 1 dargestellt, erfolgt das Abrammen mit Überlappungsbereichen, so dass die gesamte Deponiefläche gleichmäßig verdichtet wird. Um eine optimierte Stauchung in der Fläche und damit eine geschlossene, verdichtete Erdtenne mit unterschiedlich gearteten Müll- und Ablagerungsschichten herstellen zu können, ist die Fallplattenverdichtung vorzugsweise in mindestens drei Arbeitsgängen vorzunehmen. Dabei wird zunächst die Fläche mit dem Fallgewicht mit Überlappung einmal abgerammt, ehe sich der Rammvorgang wiederholt. Diese zeitlichen Abstände bei der Abrammung sind notwendig, da die im Müll vorhandenen wasserhaltigen, organischen, feinkörnigen Schichten beim Stauchen Porenwasserüberdrücke im Bodengefüge erfahren, die zugunsten der weiteren Verdichtung erst abgebaut sein müssen, ehe der nächste Rammvorgang zur wirksamen Verdichtung auch des feinkörnigen Mülls erfolgt. Bei trockenen Schüttungen ist die zeitlich verzögerte Rammung nicht notwendig.

Die mit den erläuterten Verfahren erzielbaren Tiefenverdichtungen wurden durch Probefelder, wie folgt, ermittelt: Auf einer Testdeponie sind körnige Abfallstoffe wie Sand, Schlacke, Bauschutt durchsetzt mit Lehm und Hausmüll verkippt. Die Deponieschüttung soll so aufbereitet werden, dass die Deponiefläche als Gewerbefläche wiedergenutzt und Gewerbeobjekte flach auf der Deponieschüttung gegründet werden können.

Zur Umsetzung der Maßnahme wird die Fallplattenverdichtung als dynamische Intensivverdichtung hinsichtlich ihrer Tiefenwirkung erprobt. Dabei wurden unterschiedliche Schüttfelder, überwiegend bindiger Boden (Schluff mit Sand und Schlacke und Ziegelresten), gemischtkörniger Boden (Sand, Schlackereste, Lehm und Müll sowie grober Bauschutt mit eingelagertem Müll) mit unterschiedlicher Fallenergie verdichtet. Dabei hat sich herausgestellt, dass eine Verdichtung nur dann erfolgt, wenn der Boden unter der Fallplatte im Wesentlichen nicht ausweicht, sondern gestaucht wird. Es wurde gefunden, dass überwiegend bindige Böden Fallgewichte von 3 t mit Fallhöhen von vorzugsweise 4m - 6 m, gemischtkömige Böden Fallgewichte von 5 t mit Fallhöhen zwischen 7m und 8 m sowie grobkörnige Bauschuttböden, durchsetzt mit Müll, höhere Fallgewichte von ca. 7t mit Fallhöhen zwischen 10m und 12m vertragen, ohne dass der Boden unter der Platte seitliche verdrängt sondern nur gestaucht wird.

Um die Tiefenwirkung der Fallplattenverdichtung zu überprüfen, wurden vor und nach der Verdichtung Rammsondierungen mit der schweren Rammsonde durchgeführt. Bei der schweren Rammsonde wird nach DIN 4094 eine genormte Spitze mit einer Fläche von 15 cm² mit gleichbleibender Rammenergie in den Untergrund eingerammt. Die dabei gemessenen Schlagzahlen pro 10 cm Eindringtiefe sind ein Maß für die Festigkeit bzw. Lagerungsdichte des anstehenden Bodens.

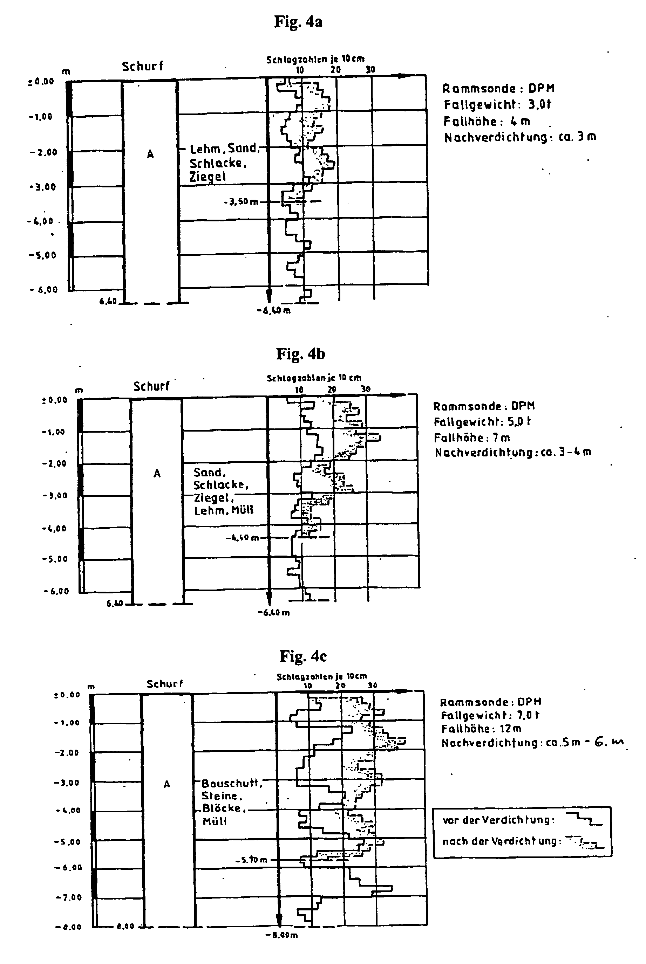

Alle Probefelder wurden zunächst vor der Verdichtung hinsichtlich der vorhandenen Festigkeit bis über 6 m Tiefe überprüft. Dabei wurden sehr unterschiedliche und geringe Rammschläge von N₁₀ = 4-13 festgestellt, wobei die hohen Rammschläge von N₁₀ > 20 auf die Einlagerung grober Bauschuttreste zurückzuführen ist. Die durchgezogene Linie in den Figuren 4a - c zeigt die Ergebnisse dieser Untersuchungen vor der Verdichtung.

Nach dreimaliger Abrammung wurden erneut Rammsondierungen durchgeführt. Die zweiten Rammsondierungen zeigen wesentlich höhere Rammschläge von N₁₀=12 - >30. Darüber hinaus erkennt man die Tiefe von 3,5m bis 5,7m, bis zu der deutlich erhöhte Anzahlen von Rammschlägen gegenüber den Anzahlen vor der Verdichtung auftreten. Dies ergibt sich aus den gestrichelten Linien in den Fign. 4a - 4c, die gegenüber den Messungen für unbehandelte Deponieschüttungen (durchgezogenen Linien) signifikant nach rechts, d.h. zu höheren Anzahlen an Rammschlägen verschoben sind. Die nachfolgende Tabelle fasst die Ergebnisse der durchgeführten Untersuchungen zusammen:

| **Art der Schüttung** | **Fallgewicht** | **Fallhöhe** | **Einwirkungstiefen** |
|---|---|---|---|
| Müll mit weniger als 3 % Bauschutt | 3 - 4 t | 5 - 7 m | 3 - 4 m |
| gemischte Schüttung mit Bauschutt 50 % zu 50 % | 4 - 5 t | 6 - 8 m | 4 - 5 m |
| überwiegend grober Bauschutt mit Müll 70 % zu 30 % | 6 - 7 t | 10 - 12 m | 5 - 6 m |

Nach dem dreimaligem Rammvorgang wird die Oberfläche mit Vibrationsmantelglattwalzen mit einem bevorzugten Walzgewicht > 12 t, geglättet und so verdichtet, dass sich eine feste bis harte Erdtenne ergibt, die darüber hinaus aufgrund der Kornzertrümmerung unmittelbar unter der Fallplatte in Verbindung mit dem ablagerten Müll eine feinkörnige, relativ glatte, porengeschlossene Oberfläche ergibt.

Auf steilen Böschungen kann eine flächige Nachverdichtung im Böschungsbereich zugunsten des Luftabschlusses gegen Brände nicht mehr mit ausreichendem Erfolg durchgeführt werden, da die Fallplatte auf der Schrägen abrutscht. Ist ausreichend Platz vorhanden, werden daher die Böschungen auf Neigungen von ≥ 1 : 2,5 abgeflacht. Dieser Zustand ist schematisch in Fig. 2. dargestellt.

Ist dies nicht möglich, werden wie in Fig. 3 gezeigt durch Einschachten in steilen Böschungen 2 bis 3 m breite Bermen 20 hergestellt, wobei der Abstand der Bermen 20 mit 4,0-6,0 m nach der Einwirkungstiefe der Fallplatte 10 bestimmt wird. Auf den Bermen 20 kann die Fallplattenverdichtung wie auf dem Plateau vorgenommen werden. Darüber kann nachfolgend die Gesteinssicherungsschicht und die Rekultivierungsschicht aufgetragen werden, die weiter unten genauer erläutert werden. Die Verdichtung der Sicherungsschicht mit Vibrationsmantelglattwalzen wird zweckmäßigerweise mit Seilführung senkrecht zur Falllinie auf den Böschungsflächen durchgeführt.

Bei nicht brennenden Deponien ist eine Verdichtungsmaßnahme mit Fallplatten in der oben erläuterten Weise nicht erforderlich. Hier genügt die Nachverdichtung der Deponieschüttung auf profilierten Böschungen und dem Deponieplateau mit Stampffußwalzen und Vibrationsmantelglattwalzen, Walzgewicht 10 - 12t in dreimaligem Arbeitsgang zur Auflagerung der Gesteinssicherungsschicht bzw. der direkten Auflagerung einer wasserspeichernden Rekultivierungsschicht aus Gesteinsschutt und geeigneten Schlämmen.

### Oberflächenabdichtungen aus Gesteinsmaterialien:

Aufgrund der heterogen zusammengesetzten Deponieschüttung aus Bauschutt und Müll lässt sich trotz Tiefenverdichtungen von 3m - 6m häufig kein absoluter Luftabschluss zur Vermeidung einer Sauerstoffzufuhr erreichen. Deshalb ist es vorteilhaft darüber eine wirksame Oberflächenabdichtung zugunsten eines Luftabschlusses und zur Unterbindung von Wasserzutritt auf dem verdichteten Deponiekörper aufzutragen.

Die Oberflächenabdichtung für einen Luftabschlusses und eine wirksame Wasserabweisung kann nicht nur durch einen niedrigen K-Wert wie zum Beispiel für Ton mit K ≤ 5 x 10⁻¹⁰ m/s erzielt werden. Statt dessen besteht auch die Möglichkeit eine gleiche Schutzfunktion gegen Niederschlagswasserdurchfluss darzustellen mittels homogener, feinkörniger Gesteinsschichten mit Durchlässigkeitsbeiwerten von 1 x 10⁻⁸ bis 5 x 10⁻⁹ m/s entsprechend einem sandigen Schluff aber gleichzeitig mit hohen Wasserspeichervermögen in dem sehr feinporigen Gestein. Die Sicherungsschicht 30 muss darüber hinaus so beschaffen sein, dass sie bei der sehr intensiven Sonneneinstrahlung infolge von Austrocknung nicht schrumpft und nur äußerst geringe Schwindprozesse bei Einwirkung hoher Temperaturen von unten entstehen.

Anders ausgedrückt bedeutet das, dass die Materialien für die Gesteinssicherungsschicht 30 die Wirksamkeit des Luftabschlusses und der Gasrückhaltung nicht verlieren dürfen. Dies bedeutet, dass sie in eingebautem, verdichtetem Zustand bei Einwirkung hoher Temperaturen > 200° C von unten bei Zutritt von Wasser nicht verfestigen, sondern bei starken Niederschlagsereignissen noch Sedimentationseigenschaften besitzen, was immer zum Luftabschluss und damit zur Erhöhung der Dichtigkeit führt (Selbstreparatureffekt). Damit die Sedimentationseigenschaften der Gesteinssicherungsschicht 30 keine schädlichen Auswaschungen in den Deponiekörper erfahren, ist es notwendig die Sicherungsschicht auf filterfeste Deponieplani aufzulagern, denn das Feinstkorn der Sicherungsschicht darf nicht in die unterlagernde Deponieschüttung eindringen.

Das Verlegen von Filtervliesen zur Gewährleistung einer derartigen Filterfestigkeit scheidet jedoch aufgrund der mangelnden Temperaturbeständigkeit aus. Ferner können mangels Temperaturbeständigkeit für eine Oberflächenabdichtung bindige oder gemischtkörnige Bodenschichten mit bindigen Anteilen nur schlecht eingesetzt werden, da sie bei intensiver Sonneneinstrahlung und besonders bei hohen Schwelbrandtemperaturen ihre abdichtende Wirkung üblicherweise verlieren. Dadurch entstehen große Schrumpfrisse oder Veränderungen der Mineralstruktur (Porosität).

Um eine filterfeste Auflagerung zu erreichen, wird daher zweckmäßigerweise zerbrochener Bauschutt aus anstehendem Gestein solange mit der Freifallramme in den Deponiekörper eingeschlagen und mit Stampffuß- bzw. Vibrationsmantelglattwalzen nachträglich so verdichtet bis eine glatte, geschlossene Erdtenne aus Gesteinsschutt der Körnung o 0/100 mm entsteht. Es wurde gefunden, dass Sedimentgesteine, wie Kalksandsteine, Tonsteine, Sandsteine, nach Aufbereitung zu einem Gesteinsmörtel für derartige Abdeckungen und Abdichtungen geeignet sind. Hierbei ist der beim Brechen anfallende Feinstkornanteil (Verwitterungsprodukte des Gesteins) Kø 0 < 0,06 mm als Zuschlagsstoff mit weicher Bindung, Sand und Kies als geschlossene Tragschicht zu betrachten. In erdfeuchtem Zustand verdichtet, entspricht diese Schicht einem erdfeuchten Gesteinsbeton ohne nennenswerte hydraulische Bindung mit hoher Tragfähigkeit.

Das Sedimentgestein bzw. das Abfallprodukt des Sedimentgesteins Bauschutt wird in einer Brechanlage auf Körnung ø 0/32 mm bzw. 0/16 mm gebrochen. Dabei ist darauf zu achten, dass der Feinstkornanteil, Korn ø < 0,06 mm > 15 Gewichtsprozent bevorzugt > 25 Gewichtsprozent und besonders bevorzugt > 30 Gewichtsprozent beträgt. Weiche Kalk-, Sand- Lava- Ton- und Tuffgesteine besitzen diesen Feinkornanteil nach dem Brechen. Härtere Gesteine wie Dolomit, Sandschiefer, harter Sandstein etc. liegen im Feinkornanteil wesentlich darunter 5-15%, so dass entsprechende Mengen Feinkornanteil zugegeben werden müssen. Aufbereitete weiche Gesteinsschichten, die beim Brechen einen Feinkornanteil Ko ø ≥30 % besitzen, ergeben im verdichteten Zustand entsprechend nachstehender Behandlung Abdichtungswerte von 1 x 10⁻⁸ bis Sx10⁻⁹ m/s, gemessen mit einem Druckgefälle von 1 = 10. Dies bedeutet, auf eine 10 cm dicke Probe wird eine Wassersäule von 1,0m aufgebracht und bei konstanter Druckhöhe die Durchflussmenge in der Zeit bestimmt.

Im Vorfeld der Durchlässigkeitsversuche erfolgt die Wassersättigung. Das Wasserspeichervermögen ist die Wassermenge, die der verdichtete Boden annimmt, ehe Wassersättigung bzw. ein Wasserdurchfluss registriert wird. Die Wasserannahme erfolgt über die Kapillarität.

Bei den gemessenen Werten handelt es sich um Abdichtungswerte vergleichbar mit einer verdichteten Schluffschicht (Lehmschicht), die aber für solche Aufgaben nicht geeignet ist. Das Wasserspeichervermögen derartig aufgearbeiteter, verdichteter Gesteinsschichten beträgt 250 - 300 1/m³. Eine 0,6 m mächtige Sicherungsschicht kann demnach Niederschläge bis zu 150 bis 180 mm pro Quadratmeter vom Deponiekörper zurückhalten. Die hohe Wasserspeicherkapazität in Verbindung mit einem geringen Durchlässigkeitswert von < 1x10⁻⁸ m/s bewirkt immer einen wirksamen Luftabschluss als wesentliches Sicherungsmerkmal gegen brennende Deponien.

Das aufbereitete, bis zum Feinkorn gebrochene Material wird mit Wasser durchfeuchtet. Das Wasser bildet ein ausreichendes Schmiermittel zur besseren Verdichtungsfähigkeit. Bevorzugt sollte hierfür Meerwasser eingesetzt werden. Das trockene, gebrochene Gesteinsmaterial ist so intensiv zu bewässern, dass sich ein Wassergehalt von W ≥ 20 % einstellt. Übernässungen für den Einbau mit Verdichtung sind erwünscht, da in der heißen Sonne eine schnelle Rücktrocknung erfolgt und die dabei entstehenden wässrigen Salzstrukturen das Porengefüge verkleben.

Das Material der Gesteinssicherungsschicht 30 (vgl. Fig. 3) wird in Schichtstärken von 30cm ausplaniert und im Anschluss daran mit Stampffußwalzen zur weiteren Zerkleinerung und intensiverem Komverbund zwischen Feinkorn und Grobkorn und danach mit Vibrationsmantelglattwalzen, Walzgewicht 10 bis 12t, in dreimaligem Arbeitsgang verdichtet, was eine Oberflächenglättung und Porenschluss aufgrund der enthaltenen Feinstanteile an der Oberfläche bewirkt. Eine derartige Schicht 30 wird zweckmäßigerweise im zweilagigen Einbau = 2 x 30 = 60 cm hergestellt. Bei mehrmaliger Einwirkung von Meerwasser und Austrocknung durch die Sonne kommt es zu keiner Verschlechterung der abdichtenden Wirkung. Die Verklebung der Bodenporen mit wässrigen Salzstrukturen wird bei Niederschlagswassereinwirkung nicht rückgängig, sondern die Gesteinsschichten, bewässert mit Meerwasser, erhalten weiter ihre abdichtende Wirkung. Die Ursache hierfür ist die erhöhte Strukturierung (weiche Bindung) von wässrigen Salzlösungen in porösen Systemen. Infolge der Siedepunktserhöhung durch wässrige Salzlösungen im Bodenporenwasser liegt auch eine geringere Anfälligkeit gegen Schwindrisse bei hohen Temperaturen vor.

Durch Abtrocknung infolge der Einwirkung von Sonnenstrahlung von 60 - 70° C verbacken diese Schichten zur festen bis harten Erdtenne; selbst bei Abkühlung in der Nacht bis 0° C entstehen keine Schrumpfrisse. Die Gesteinsicherungsschichten besitzen eine sehr hohe Scherfestigkeit von (ϕ ≥ 35°) und damit eine hohe Erosions- und Deflationsfestigkeit, so dass einwirkende widrige Witterungseinflüsse diese Sicherungsschichten nicht zerstören.

Bei Einwirkung von Schwelbränden bis zu Temperaturen von 300° C im Muffelofen wurde festgestellt, dass sich die Eigenschaften der Abdichtungssysteme nicht negativ verändern. Dies ist bei den geprüften Steinen auf den Kalkanteil CaO zurückzuführen, der besonders aufgrund der feinkörnigen Bodenstruktur ≤ 25 % / K ø 0 ≤ 0,06 mm wie bei einer Kalkbrennung Kristallwasser abgibt. Es entsteht die bekannte chemische Umsetzung Ca(OH₂) zu CaO + H₂O. Kommt bei Niederschlagsereignissen durch Kapillarität Wasser in die unteren Zonen der Deponieschüttung, entstehen sehr geringe hydraulische weiche Bindungen, da mangels hoher Temperaturen von > 900 - 1300° C, die bei der Kalkbrennung benötigt werden, eine absolute Umsetzung der o. g. Formel nicht zu erwarten ist.

Es hat sich gezeigt, dass bei härteren Gesteinen beim Brechen ein Feinanteil der Korngröße ≤ 0,06 mm von < 10% entsteht. Derartige Materialien besitzen unter Berücksichtigung der oben genannten Verdichtungsmethode Durchlässigkeitsbeiwerte um ca. 1 x 10⁻⁶m/s. Eine Erhöhung der Feinstanteile aus gleichem Material durch zusätzliches Mahlen des harten Gesteins bringt keine wesentlichen Veränderungen der Abdichtungsqualität. Die Werte liegen zwischen 3 - 8 x 10⁻⁷m/s. Eine wirksame Abdichtung mit den oben angegebenen Werten wird nur dann erreicht, wenn die erforderlichen Prozentwerte der Feinstanteile durch Brechen des Gesteins erzielt werden, was dann der Fall ist, wenn das Gestein hinreichend weich ist.

Der zugebene Feinkornanteil ø 0,06 mm als Zuschlagstoff darf nicht aus natürlichen bindigen Bodenanteilen bestehen (siehe hierzu weiter oben). Er kann wie bereits erwähnt zur Verringerung der Durchlässigkeit auch nicht aus dem gesteinsharten Gestein durch Mahlen gewonnen werden, wie die Versuche zeigen. Für derartige Temperaturbeanspruchungen ist nur ein thermisch behandeltes Material mit geringer hydraulischer Abbindewirkung einsetzbar.

Zuschlagstoffe wie Baustoffe, Zement und Kalk erzeugen mit den aufbereiteten Gesteinsmaterialien eine Verfestigungsschicht, die bei geringsten Verformungen reißt bzw. bei geringen Verformungen bricht und bei hohen Temperaturen Schwindrisse verursacht, die bei Wasserzutritt offen bleiben. Darüber hinaus ist der Einsatz von Zement oder Kalk als Baustoffe sehr kostenintensiv.

Es wurde festgestellt, dass als Zuschlagsstoff für abdichtende und damit luftabschließende Gesteinssicherungsschichten Abfallstoffe wie Steinkohlenflugasche, Wirbelschichtaschen, Papieraschen sowie Pfannenschlacken oder Klärschlammaschen geeignet sind. Werden derartige Aschen, die eine feinkörnige Bodenstruktur hinsichtlich der Korngrößenverteilung von < 1,0 mm bis 0,001 mm aufweisen, in trockener Form dem gebrochenen, harten Gestein in Mengen von 15 - 30 Vol. % zugegeben und homogen in den Gesteinsschutt eingemischt, anschließend mit Wasser bzw. Meerwasser ausreichend durchfeuchtet, Wassergehalt W ≥ 20 %, und verdichtet, entstehen gleichartige Schichten wie aus weichen Sedimentgesteinen. Es werden auch Durchlässigkeitswerte in der Größenordnung von 1 x 10⁻⁸ bis 5x 10⁻⁹ m/s mit einem Gefälle von 1 = 10 gemessen. Bei diesen Materialien entsteht eine weiche Kalkbildung aufgrund vorhandener freier Kalkanteile in den Aschen in der Größenordnung von 10 - 30 %.

Auch die mit Aschen aufbereiteten Gesteinsmaterialien als Abdeckschicht, erfahren keine Schädigungen durch Temperatureinwirkungen von oben oder unten. Sie sind ebenfalls temperaturbeständig, nicht schrumpfanfällig, hoch scherfest und äußerst erosionssicher.

Abdeck- bzw. Abdichtungsschichten aus Gesteinsmaterialien sind für Bepflanzungen nicht geeignet, sie bilden jedoch eine gute Auflage- und Tragschicht mit dem darunter anstehenden, tiefenverdichteten Deponiekörper für Kulturboden und die landschaftsgerechte Gestaltung für Wege, Park- und Fahr- sowie Freizeitflächen. Sie besitzen Tragfähigkeitswerte von Eᵥ₁ ≥ 60 MN/m² und sind für das Anlegen von Park- und Fahrflächen oder Freizeitflächen gut geeignet. Derartige Tragfähigkeitswerte werden von bindigen Sicherungsschichten mit dieser Nachnutzungsmöglichkeit nicht erzielt.

### Sicherung der Brandgase:

Durch eine derartige Verdichtung des Deponiekörpers und der Auftragung einer solchen Gesteinsicherungsschicht wird der Brand allmählich erstickt und der Austritt von schwelenden Gasen sofort unterbunden. Erst unter derart wirksamen und haltbaren Oberflächenabdichtungen können in sinnvoller Weise Konzentrationsmessungen durchgeführt werden, um einen oder mehrere Brandherde zu lokalisieren. Danach können an den geeigneten Stellen Gasbrunnen oder Gasdrainagen mit ausreichender Wirkung installiert werden, da Verbindungen zur Außenluft ausgeschlossen sind. Das schädliche Gas kann somit unter der Gesteinssicherungsschicht abgesaugt, verbrannt und das bei der Verbrennung entstehende nicht brennbare CO₂ in den Brandherd zu weiterer Eindämmung der Brandherde zurückgeführt werden.

Das Wesentliche einer derartig beschriebenen Sicherung ist die sofortige Unterbindung der Gasemission und die Möglichkeit einer sofortigen Landschaftsgestaltung oder Nutzung ohne kostenaufwendige Begleitung und Nachsorgearbeiten zur Erhaltung der Sicherungsschichten. Derartige Sicherungen können auch abschnittsweise durchgeführt werden.

### Rekultivierung mit wasserspeichernden Kunstböden:

Auf die eingebrachte Gesteinssicherungsschicht kann unmittelbar eine Rekultivierungsschicht 40 (vgl. Fig. 3) zur Begrünung aufgebracht werden, da weitere Vorsorgemaßnahmen zur Erhaltung der Wirksamkeit der Gesteinssicherungsschicht nicht notwendig sind. Es sind solche Kulturböden aufzutragen, die sich besonders durch ein hohes Wasserspeichervermögen ausweisen und darüber hinaus fruchtbar, standfest und erosionsfest sind.

Auf Grund der in den ariden Zonen wenig vorkommenden und damit kostbaren bindigen Agrarböden kann nicht auf bindige Böden zurückgegriffen werden. Da Baumbepflanzungen Schichtstärken von > 1,5m benötigen, können hierfür geeignete Kunstböden aus geeigneten Abfällen rekrutiert werden, um auch das Prinzip der Wirtschaftlichkeit, besonders in den südlichen Länder, zugunsten einer hochwirksamen Begrünung mit geringen Unterhaltungskosten zu gewährleisten,.

Da unter Wirtschaftlichkeitsgesichtspunkten und unter Pflanzgesichtspunkten große Bodenmassen zur Rekultivierung nicht zur Verfügung stehen und gleichzeitig eine intensive Bewässerung in der Pflanzzone auf ein verträgliches Maß zugunsten der Unterhaltungskosten zu reduzieren ist, sind Kunstböden mit folgenden Eigenschaften aus überwiegend örtlich anstehenden Abfallböden wie folgt zu entwickeln und herzustellen:

Als Bodengerüst werden die oben zitierten gebrochenen Bauschuttgesteine aus Sedimentgesteinen der Körnung Ko ø 0/16 mm bzw. Ko ø 0/100 mm gewählt. Die Korngröße sollte von der Grabfreudigkeit der Kulturböden abhängig gemacht werden. In Böden mit Gesteinsstrukturen 0/100 mm lässt sich schwer mit dem Spaten eingraben. Diese Böden sind aufgrund ihrer Scherfestigkeit auch auf steilen Böschungen standsicher und können feineren, grabfreudigen Boden gegen Abrutschen halten. In Böden mit einer Korngrößenverteilung von Kₒ ø 0 0/16 mm ist in lockerer Lagerung eine gute Eingrabung mit dem Spaten möglich. Diese Böden besitzen in lockerer bis mitteldichter Lagerung ein offenes Porenvolumen von ≥ 35 %. Diese Bodenporen sind durch Einmischen von geeigneten Gewässerschlämmen oder geeignete Klärschlämme, wie sie z.B. in Deutschland auch für die Landwirtschaft Verwertung finden, durch homogenes Einmischen auszufüllen.

Derartige Abfallmaterialien, wie sie in großen Überschussmengen in Westeuropa vorkommen, sind der Sonneneinstrahlung zur Abtrocknung auszusetzen. Der erdfeucht bis trockene Schlamm kann anschließend in diese Gesteinsmaterialien homogen eingemischt werden. Bei Zugabemengen von 30-40 Vol. % entsteht ein leicht erdfeuchter Boden in sehr guter Verarbeitungsfähigkeit und Standfestigkeit auf Böschungen was besonders für Halden benötigt wird. Das wesentliche Merkmal dieser Böden ist die Fruchtbarkeit aufgrund der enthaltenen hohen Düngestoffe wie Kalk, Phosphor, Stickstoff und essentielle, pflanzenverträgliche und nutzbare Nährstoffe sowie das hohe Wasserspeichervermögen von > 400 l/m³.

Als Zuschlagsstoffe sollten für derartige Rekultivierungen nur solche Schlämme verwendet werden, die auch in den Herkunftsländern aufgrund der bodenkundlichen, umwelttechnischen Qualität zur Herstellung von Rekultivierungsböden geeignet sind. Werden einzelne Überschreitungen von schwermetallrelevanten Schadstoffen gemessen, kann beispielsweise, wie auch in den Herkunftsländern üblich, eine Immobilisierung die Schadlosigkeit zur Herstellung eines Rekultivierungsbodens unter Beweis gestellt und deren Pflanzenverfügbarkeit und damit allgemeine Umweltverträglichkeit dargestellt werden.

Zusammenfassend lässt sich das Verfahren gemäß eines Ausführungsbeispiels der vorliegenden Erfindung wie folgt beschreiben:
- die Durchführung einer Tiefenverdichtung des Müllkörpers mit sogenannten leichten Fallplatten mit Gewichten zwischen 3t und 7t und Fallhöhen von 5-10 m zur Tiefenverdichtung des Müllkörpers und damit Unterbindung der Brandherde durch Kamin und Schlotbildungen.
- Das Auftragen einer Gesteinssicherungsschicht aus ortsüblich vorkommendem Bauschutt, des anstehenden Naturgesteins, überwiegend Sedimentgesteinen, gegebenenfalls durch Zuschlag von geeigneten kalkhaltigen Aschen und Wirbelstäuben.
- Die Aufbereitung des Gesteins überwiegend mit Meerwasser, so dass eine hitzebeständige, nicht schrumpfanfällige, luftabschließende Sicherungsschicht als Erdtenne entsteht, die darüber hinaus bei Starkregenereignissen als Abdichtungsschicht Wasser abweist bzw. Wasser über ein hohes Wasserspeichervermögen über die Kapillarität aufnimmt, so dass das Wasser nicht in den Deponiekörper gelangt.
- Eine sofortige Überlagerung der Sicherungsschicht mit Kulturboden, rekrutiert aus Abfallstoffen, gebrochenem Bauschutt der Körnung ø 0/100 mm bzw. 0/16 mm der ortsüblich anstehenden Gesteine vermischt mit umweltverträglichen Gewässer- oder Klärschlämmen im Verhältnis 60/40 % bzw. bis 80/20 % je nach Pflanzanforderung Die Herstellung von Kunstböden für Bepflanzungen mit einem ausgesprochen hohen Wasserspeichervermögen wirkt sich äußerst wirtschaftlich auf die Unterhaltung der Bepflanzung hinsichtlich der notwendigen Bewässerungsmaßnahmen aus.
- Die tiefenverdichtete Deponieschüttung mit Einwirkungstiefen von i. M. 4,0 m sowie die darüber liegende Gesteinssicherungsschicht ergeben eine sehr hohe Standfestigkeit und Tragfähigkeit aufgrund der wirksamen hohen Scherfestigkeit, so dass darüber ohne erforderliche Deponienachsorge auch Wege-, Park- und Fahrflächen sowie Sportplatzflächen angelegt werden können.

## Patentansprüche

1. Verfahren zur Oberflächenabdichtung von Deponieschüttungen, insbesondere brennenden oder schwelenden Deponieschüttungen, mit dem folgenden Verfahrensschritt:
Aufbringen einer hitzebeständigen Gesteinssicherungsschicht (30), die eine Gesteinsmischung mit einer Körnung eines Durchmesser von 0 - 16 mm umfasst, wobei der Feinstkomanteil mit einem Durchmesser < 0,06 mm mehr als 15 Gewichtsprozent, bevorzugt mehr als 25 Gewichtsprozent und besonders bevorzugt mehr als 30 Gewichtsprozent beträgt und *durch Brechen des Gesteins der Gesteinsmischung erzielt worden ist.*

2. Verfahren nach Anspruch 1, wobei die Gesteinssicherungsschicht eine Dikke von 0,5 - 1m aufweist.

3. Verfahren nach Anspruch 1 oder 2, wobei die Gesteinsmischung vor dem Aufbringen als Gesteinssicherungsschicht (30) zumindest einmal mit Wasser, insbesondere Meerwasser, durchfeuchtet und nachfolgend verdichtet wird.

4. Verfahren nach Anspruch 3, wobei die Gesteinsmischung so intensiv bewässert wird, dass sich ein Wassergehalt von ≥ 20 % ergibt.

5. Verfahren nach einem der vorhergehenden Ansprüche, wobei die Gesteinsmischung ferner zumindest einen der folgenden Zuschlagstoffe aufweist:
a. Steinkohlenflugasche
b. Wirbelschichtasche
c. Papierasche
d. Pfannenschlacke
e. Klärschlammasche

6. Verfahren nach Anspruch 5, wobei der / die Zuschlagstoffe in Mengen von 15 Vol.% - 30 Vol.% zugegeben werden.

7. Verfahren nach einem der vorhergehenden Ansprüche, wobei unmittelbar nach der Gesteinssicherungsschicht (30) eine Rekultivierungsschicht (40) aufgebracht wird, die gebrochenen Bauschutt einer Körnung von 0-100 mm, bevorzugt 0-16 mm, vermischt mit Klärschlamm und / oder Gewässerschlamm aufweist.

8. Verfahren nach einem der vorhergehenden Ansprüche, wobei vor dem Aufbringen der Gesteinssicherungsschicht (30) zumindest folgender Verfahrensschritt durchgeführt wird:
Fallplattenverdichtung der Deponieschüttung, wobei das Gewicht und /oder die Fallhöhe der Fallplatte (10) in Abhängigkeit der Beschaffenheit des zu verdichtenden Materials der Deponieschüttung so gewählt wird, dass ein seitliches Bodenausweichen unter der Fallplatte (10) im Wesentlichen vermieden wird.

9. Verfahren nach Anspruch 8, wobei das Gewicht G der Fallplatte (10) ≤ 10t beträgt und die Fallplatte (10) eine Fläche F von 1 - 2m², bevorzugt 1,4m² ≤F ≤ 1,65 m² aufweist.

10. Verfahren nach Anspruch 9, wobei die Fallhöhe H der Fallplatte (10) ≤ 10m beträgt.

11. Verfahren nach einem der Ansprüche 8-10, wobei der mit der Fallplattenverdichtung bearbeitete Bereich der Deponieschüttung zu weniger als 10 % Bauschutt und zu mehr als 90 % Müll aufweist, und wobei das Gewicht G der Fallplatte (10) im Bereich 2t < G < 5t, bevorzugt 3t ≤ G ≤ 4t liegt und die Fallplatte (10) eine Fläche F von 1 - 2 m², bevorzugt 1,4m² ≤ F < 1,65m² aufweist.

12. Verfahren nach Anspruch 11, wobei die Fallhöhe H im Bereich 4m < H < 8m, bevorzugt 5m ≤ H ≤ 7m liegt.

13. Verfahren nach einem der Ansprüche 8 - 10, wobei der mit der Fallplattenverdichtung bearbeitete Bereich der Deponieschüttung zu ungefähr 50 % Bauschutt und zu ungefähr 50 % Müll aufweist und wobei das Gewicht G der Fallplatte im Bereich 3t < G < 6t, bevorzugt 4t ≤ G ≤ 5t liegt und die Fallplatte (10) eine Fläche F von 1 - 2 m², bevorzugt 1,4m² ≤ F ≤ 1,65 m² aufweist.

14. Verfahren nach Anspruch 13, wobei die Fallhöhe H im Bereich 5m < H < 9m, bevorzugt 6m ≤ H ≤ 8m liegt.

15. Verfahren nach einem der Ansprüche 8-10, wobei der mit der Fallplattenverdichtung bearbeitete Bereich der Deponieschüttung zu ungefähr 70 % Bauschutt und zu ungefähr 30 % Müll aufweist und wobei das Gewicht G der Fallplatte im Bereich 5t < G < 8t, bevorzugt 6t ≤ G ≤ 7t liegt und die Fallplatte (10) eine Fläche F von 1-2 m², bevorzugt 1,4m² ≤ F ≤ 1,65 m² aufweist.

16. Verfahren nach Anspruch 15, wobei die Fallhöhe H im Bereich 9m < H < 13m, bevorzugt 10m ≤ H ≤ 12m liegt.

17. Verfahren nach einem der vorhergehenden Ansprüche 8-16, wobei die Fallplattenverdichtung mehrfach, insbesondere zumindest dreimal, durchgeführt wird, wobei die wiederholte Fallplattenverdichtung eines Bereichs der Deponieschüttung mit ausreichendem Zeitabstand durchgeführt wird, um einen Abbau von Porenwasserüberdrücken im bearbeiteten Bereich vor der erneuten Fallplattenverdichtung zu ermöglichen.

18. Verfahren nach einem der vorhergehenden Ansprüche 8-17, wobei nach der Fallplattenverdichtung die Oberfläche mit einer Walze, insbesondere einer Vibrationswalze mit einem Walzgewicht > 10 t, geglättet wird.

19. Verfahren nach einem der vorhergehenden Ansprüche 8-18, wobei in Bereichen der Deponieschüttung mit einer Neigung ≥ 1 : 2,5 Bermen (20) angelegt werden, wobei der Höhenunterschied der Oberflächen zwei benachbarter Bermen (20) bevorzugt im Wesentlichen der Einwirkungstiefe der Fallplattenverdichtung entspricht.

20. Verfahren nach einem der vorhergehenden Ansprüche, wobei nach dem Aufbringen der Gesteinssicherungsschicht (30) und der Rekultivierungsschicht (40) Gasbrunnen oder Gasdrainagen im Bereich der Brandherde einer brennenden oder schwelenden Deponieschüttung angeordnet werden.

## Claims

1. Method for surface sealing of waste sites especially of burning or smouldering waste sites with the following method step:
Application of a heat resistant stone protection layer (30), which comprises a stone mixture with a granulation with a diameter from 0-16 mm, wherein the smallest grain proportion with a diameter < 0.06 mm amounts to more than 15 weight percentage, preferably more than 25 weight percentage and especially preferred more than 30 weight percentage and *which is obtained through milling of the stone mixture.*

2. Method according to claim 1, wherein the stone protection layer has a thickness of 0.5 - 1 m.

3. Method according to claim 1 or 2, wherein the stone mixture is at least once imbued with water, especially sea water, before the application as stone protection layer (30) and subsequently compacted.

4. Method according to claim 3, wherein the stone mixture is so intensively watered that it contains a concentration of water of ≥ 20%.

5. Method according to any one of the preceding claims, wherein the stone mixture further comprises at least one of the following aggregates:
a. coal fly ash
b. fluidised bed ash
c. paper ash
d. pan bed ash
e. clearing sludge ash

6. Method according to claim 5, wherein the aggregates(s) are added in quantities from 15 Vol.% - 30 Vol.%.

7. Method according to any one of the preceding claims, wherein immediately after the stone protection layer (30) a re-cultivation layer (40) is applied, which comprises the broken construction waste with a granulation from 0 - 100 mm, preferably 0-16 mm, mixed with clearing sludge and/or water sludge.

8. Method according to any one of the preceding claims, wherein before the application of the stone protection layer (30) at least the following method step is executed:
Falling plate compaction of the waste site, wherein the weight and/or the falling height of the falling plate (10) is chosen depending on the condition of the materials to be compacted of the wasting site, in such a way that a sidewise sliding of the ground under the falling plate (10) is essentially avoided.

9. Method according to claim 8, wherein the weight G of the falling plate (10) amounts to ≤ 10 t and the falling plate (10) has an area F from 1 - 2 m², preferably 1.4 m² ≤ F ≤ 1.65 m².

10. Method according to claim 9, wherein the falling height H of the falling plate (10) amounts to ≤ 10 m.

11. Method according to any one of the claims 8-10, wherein the area of the waste site which is processed with a falling plate compaction comprises less than 10% construction waste and more than 90% waste, and wherein the weight G of the falling plate (10) lies in the region 2 t < G < 5 t, preferably 3 t ≤ G ≤ 4 t and the falling plate (10) has an area F from 1 - 2 m², preferably 1.4m² ≤ F ≤ 1.65 m².

12. Method according to claim 11, wherein the falling height H lies in the interval 4 in < H < 8 in, preferably 5m ≤ H ≤ 7m.

13. Method according to any one of the claims 8 - 10, wherein the area of the waste site which is processed with a falling plate compaction consists of approximately 50% construction waste and approximately 50% waste and wherein the weight G of the falling plate lies in the interval 3 t < G < 6 t, preferably 4 t ≤ G ≤ 5 t and the falling plate (10) has an area F from 1-2 m², preferably 1.4 m² ≤ F ≤ 1.65 m².

14. Method according to claim 13, wherein the falling height H lies in the interval 5 m < H < 9 m, preferably 6 m ≤ H ≤ 8 m.

15. Method according to any one of the claims 8-10, wherein the area of the waste site which is processed with a falling plate compaction consists of approximately 70% construction waste and approximately 30% waste and wherein the weight G of the falling plate lies in the interval 5 t < G < 8 t, preferably 6 t ≤ G ≤ 7 t and the falling plate (10) has an area F from 1-2 m², preferably 1.4 m² ≤ F ≤ 1.65 m².

16. Method according to claim 15, wherein the falling height H lies in the interval from 9 m < H < 13 m, preferably 10 m ≤ H ≤ 12 m.

17. Method according to any one of the preceding claims 8-16, wherein the falling plate compaction is executed several times, especially at least three times, wherein the repeated falling plate compaction of an area of the waste site is executed with a sufficient time interval in order to allow a reduction of the excess pore water in the processed area before the new falling plate compaction.

18. Method according to any one the preceding claims 8-17, wherein after the falling plate compaction the surface is flattened with a roller, especially a vibration roller with a roller weight > 10 t.

19. Method according to any one of the preceding claims 8-18, wherein in the areas of the wasting site with an inclination ≥ 1:2.5 berms (20) are applied, wherein the height difference of the surfaces of two neighbouring berms (20) preferably has essentially the impact depth of the falling plate compaction.

20. Method according to any one of the preceding claims, wherein after the application of the stone protection layer (30) and of the re-cultivation layer (40) gas fountains or gas drainages are arranged in the area of the origin of fire of a burning or smouldering waste site.

## Revendications

1. Procédé d'étanchement superficiel de remblais de décharge, en particulier de remblais de décharge en combustion vive ou lente, comprenant l'étape de procédé suivante:
épandage d'une couche de consolidation minérale thermorésistante (30) constituée d'un mélange minéral possédant une granulométrie de 0 à 16 mm de diamètre, la proportion de grains très fins de diamètre < 0,06 mm étant supérieure à 15 % en poids, de préférence supérieure 25 % en poids et, selon une préférence particulière, supérieure à 30 % en poids, et ayant été obtenue par concassage du minéral du mélange minéral.

2. Procédé selon la revendication 1, la couche de consolidation minérale présentant une épaisseur de 0,5 à 1 m.

3. Procédé selon la revendication 1 ou 2, le mélange minéral étant imprégné au moins une fois d'eau, en particulier d'eau de mer, avant d'être épandu sous forme de couche de consolidation minérale (30), et étant ensuite compacté.

4. Procédé selon la revendication 3, le mélange minéral étant suffisamment arrosé pour obtenir une teneur en eau ≥ 20 %.

5. Procédé selon une des revendications précédentes, le mélange minéral renfermant en outre un des adjuvants suivants:
a. cendres volantes de houille
b. cendres de lit fluidisé
c. cendres de papier
d. laitier de poche
e. cendres de boues d'épuration

6. Procédé selon la revendication 5, le ou les adjuvants étant ajoutés à raison de 15 % en volume à 30 % en volume.

7. Procédé selon une des revendications précédentes, immédiatement après la couche de consolidation minérale (30) étant épandue une couche de remise en culture (40) composée de gravats concassés d'une granulométrie de 0 à 100 mm, de préférence de 0 à 16 mm, mélangés à des boues d'épuration et/ou à des boues de cours d'eau.

8. Procédé selon une des revendications précédentes, avant l'épandage de la couche de consolidation minérale (30) étant réalisée au moins l'étape de procédé suivante :
compactage à la plaque tombante du remblai de décharge, le poids et/ou la hauteur de chute de la plaque tombante (10) étant choisis en fonction des propriétés du matériau à compacter du remblai de décharge, de façon à éviter en grande partie que le sol ne soit chassé latéralement sous la plaque tombante (10).

9. Procédé selon la revendication 8, le poids G de la plaque tombante (10) étant ≤ 10 t et la plaque tombante (10) possédant une surface de 1-2 m², de préférence de 1,4 m² ≤ F ≤ 1,65 mm².

10. Procédé selon la revendication 9, la hauteur de chute H de la plaque tombante (10) étant ≤ 10 m.

11. Procédé selon une des revendications 8 à 10, la zone du remblai de décharge traitée par compactage à la plaque tombante comportant au moins 10 % de gravats et au plus 90 % de déchets, et le poids G de la plaque tombante (10) se situant dans une plage de 2 t < G < 5 t, de préférence de 3 t ≤ G ≤ 4 t, et la plaque tombante (10) possédant une surface F de 1 à 2 m², de préférence de 1,4 m² ≤ F ≤ 1,65 m².

12. Procédé selon la revendication 11, la hauteur de chute H se situant dans une plage de 4 m < H < 8 m, de préférence de 5 m ≤ H ≤ 7 m.

13. Procédé selon une des revendications 8 à 10, la zone du remblai de décharge traitée par compactage à la plaque tombante comportant environ 50 % de gravats et environ 50 % de déchets, et le poids G de la plaque tombante se situant dans une plage de 3 t < G < 6 t, de préférence de 4 t ≤ G ≤ 5 t, et la plaque tombante (10) possédant une surface F de 1 à 2 m², de préférence de 1,4 m² ≤ F ≤ 1,65 m².

14. Procédé selon la revendication 13, la hauteur de chute H se situant dans une plage de 5 m < H < 9 m, de préférence de 6 m ≤ H ≤ 8 m.

15. Procédé selon une des revendications 8 à 10, la zone du remblai de décharge traitée par compactage à la plaque tombante comportant environ 70 % de gravats et environ 30 % de déchets, et le poids G de la plaque tombante se situant dans une plage de 5 t < G < 8 t, de préférence de 6 t ≤ G ≤ 7 t, et la plaque tombante (10) possédant une surface F de 1 à 2 m², de préférence de 1,4 m² ≤ F ≤ 1,65 m².

16. Procédé selon la revendication 15, la hauteur de chute H se situant dans une plage de 9 m < H < 13 m, de préférence de 10 m ≤ H ≤ 12 m.

17. Procédé selon une des revendications précédentes 8 à 16, le compactage à la plaque tombante étant réalisé plusieurs fois, en particulier au moins trois fois, le compactage à la plaque tombante répété d'une zone du remblai de décharge étant réalisé à des intervalles de temps suffisants pour permettre aux surpressions d'eau interstitielle de se dissiper avant un nouveau compactage à la plaque tombante.

18. Procédé selon une des revendications précédentes 8 à 17, après le compactage à la plaque tombante la surface étant aplanie avec un cylindre, en particulier un cylindre vibrant, d'un poids > 10 t.

19. Procédé selon une des revendications précédentes 8 à 18, dans les zones du remblai de décharge à pente ≥ 1 : 2,5 étant ménagées des banquettes (20), la différence de hauteur entre les surfaces de deux banquettes voisines (20) correspondant de préférence sensiblement à la profondeur d'action du compactage à la plaque tombante.

20. Procédé selon une des revendications précédentes, après épandage de la couche de consolidation minérale (30) et de la couche de remise en culture (40) étant ménagés des puits à gaz ou des drainages à gaz dans la zone du foyer d'incendie d'un remblai de décharge en combustion vive ou lente.
